(19) Europäisches Patentamt
European Patent Office
Office européen des brevets

(11) **EP 3 652 529 B1**

(12) **EUROPÄISCHE PATENTSCHRIFT**

(45) Veröffentlichungstag und Bekanntmachung des Hinweises auf die Patenterteilung:
**09.06.2021** **Patentblatt 2021/23**

(21) Anmeldenummer: **18724487.6**

(22) Anmeldetag: **26.04.2018**

(51) Int Cl.:
*G01N 29/28* *(2006.01)*     *F01N 3/20* *(2006.01)*
*F01N 11/00* *(2006.01)*     *G01N 29/22* *(2006.01)*
*G01N 29/024* *(2006.01)*

(86) Internationale Anmeldenummer:
**PCT/EP2018/060723**

(87) Internationale Veröffentlichungsnummer:
**WO 2019/011497 (17.01.2019 Gazette 2019/03)**

(54) **VORRICHTUNG ZUM MESSEN DER KONZENTRATION EINES REDUKTIONSMITTELS**

DEVICE FOR MEASURING THE CONCENTRATION OF A REDUCTANT

DISPOSITIF POUR MESURER LA CONCENTRATION D'UN AGENT RÉDUCTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.07.2017   DE 202017104156 U**

(43) Veröffentlichungstag der Anmeldung:
**20.05.2020   Patentblatt 2020/21**

(73) Patentinhaber: **Elkamet Kunststofftechnik GmbH 35216 Biedenkopf (DE)**

(72) Erfinder:
- **RÜHL, Jürgen**
  **61203 Reichelsheim (DE)**
- **EMRICH, Marco**
  **35327 Ulrichstein (DE)**
- **WAGNER, Arnd**
  **35075 Gladenbach (DE)**
- **WERNER, Marcel**
  **35713 Eschenburg (DE)**
- **FRIES, Thorsten**
  **35216 Biedenkopf-Wallau (DE)**

(74) Vertreter: **Keil & Schaafhausen Patentanwälte PartGmbB**
**Friedrichstraße 2-6**
**60323 Frankfurt am Main (DE)**

(56) Entgegenhaltungen:
WO-A1-2013/135486     WO-A1-2014/090848
DE-A1-102004 028 547     DE-A1-102009 000 062
DE-A1-102012 207 732     DE-A1-102014 109 843

**Beschreibung**

Die Erfindung betrifft eine Vorrichtung zum Messen einer Konzentration eines Reduktionsmittels, insbesondere von Harnstoff, in einer Lösung, insbesondere einer wässrigen Lösung, umfassend ein Tankgehäuse zur Bevorratung der Lösung in einem Innenraum des Tankgehäuses.

Es ist seit längerer Zeit bekannt, bei der Nachbehandlung von Abgasen von Verbrennungskraftmaschinen, insbesondere von Dieselmotoren, Reduktionsmittel einzusetzen, um die Emission von Stickoxiden (NOx) zu vermindern. Als Reduktionsmittel wird insbesondere Ammoniak eingesetzt. Ammoniak wird dabei in der Regel allerdings nicht direkt bevorratet, sondern erst bei Bedarf aus Harnstoff gebildet. Harnstoff gilt deshalb im Sinne der vorliegenden Anmeldung als Reduktionsmittel. Er wird typischerweise in Form einer wässrigen HarnstoffLösung in einem Tank der Verbrennungskraftmaschine, beispielsweise in einem Kraftfahrzeug, bevorratet. Eine übliche Konzentration des Harnstoffs in der Lösung beträgt beispielsweise 32,5 Gew.-%. Damit das Reduktionsmittel für die Abgasnachbehandlung richtig dosiert werden kann, ist es wünschenswert, die Konzentration des Harnstoffs in der Lösung möglichst genau zu kennen. Nur dann können die Parameter für die Abgasnachbehandlung eingestellt werden. Deshalb ist es erstrebenswert, die Konzentration des Harnstoffs in der Lösung im Tank messen zu können.

Die Druckschrift DE 10 2006 013 263 A1 schlägt eine Konzentrationsmessung einer Harnstoff-Wasser-Lösung vor. In oder an einem Vorratsbehälter für die Flüssigkeit ist ein Ultraschallsensor angeordnet, welcher ein Ultraschallsignal in die Flüssigkeit abstrahlt. Das Ultraschallsignal durchwandert den Vorratsbehälter und die darin befindliche Flüssigkeit bis zu einem an einer Innenseite des Vorratsbehälters angeordneten Reflektor, wird dort reflektiert und zumindest teilweise zu dem Ultraschallsensor zurückgestrahlt. Der Ultraschallsensor detektiert das reflektierte Signal, und in einer Auswerteeinheit wird ein für eine Konzentration eines Bestandteils der Flüssigkeit indikatives Konzentrationsmerkmal ermittelt.

Bei dieser Lösung können Verformungen des Vorratsbehälters, beispielsweise durch mechanische Belastungen oder durch Wärmeausdehnung, eine Messtrecke zwischen dem Ultraschallsensor und dem Reflektor erheblich beeinflussen. Dadurch wird die Genauigkeit der Ermittlung des indikativen Konzentrationsmerkmals vermindert.

Ferner offenbaren die Druckschriften WO-A-2014/090848 und WO-A-2013/135486 Vorrichtungen zur Konzentrationsmessung einer Harnstoff-Wasser-Lösung, die zwei Reflektoren in einem Tankgehäuse aufweisen. Es ist auch aus der Druckschrift DE-A-102009000062 eine Füllstandsmessvorrichtung bekannt, wobei der für die Messung verwendete Ultraschallsensor vollständig in einen Kunststoff eingebettet ist.

Die Aufgabe der vorliegenden Erfindung besteht darin, eine verbesserte Anordnung zur Messung der Konzentration von Harnstoff in einem Tank für die Lagerung harnstoffhaltiger Lösung zu schaffen.

Die Aufgabe wird gelöst durch eine Vorrichtung mit den Merkmalen des Anspruchs 1.

Da der zweite Reflektor entlang der Emissionsrichtung um den Abstand L weiter von der Sensorvorrichtung entfernt ist als der erste Reflektor, muss der zweite Teil gegenüber dem ersten Teil eine um das Zweifache des Abstands L längere Wegstrecke zurücklegen (Hin- und Rückweg), bis er auf die Sensorvorrichtung trifft. Entsprechend wird der zweite Teil mit einer zeitlichen Verzögerung t gegenüber dem ersten Teil von der Sensorvorrichtung detektiert. Eine Geschwindigkeit v des ersten Messsignals, des zurückreflektierten ersten Teils und des zurückreflektierten zweiten Teils in der Lösung hängt von der Konzentration c des Reduktionsmittels in der Lösung und von der Temperatur T der Lösung ab. Da diese Abhängigkeit $v(c,T)$ bzw. $c(v,T)$ aus empirischen Versuchen und/oder aus Formeln bekannt ist, kann aus der zeitlichen Verzögerung der Detektion des zweiten Teils und dem bekannten, festgelegten Abstand L die Konzentration des Reduktionsmittels in der Lösung mittels der Beziehung

$$t = 2 \cdot L \, / \, v(c,T)$$

bestimmt werden.

Das Vorsehen nur eines Reflektorbauteils mit sowohl dem ersten Reflektor als auch dem zweiten Reflektor bietet entscheidende Vorteile. Die unterschiedliche Wegstrecke des von dem ersten Reflektor zu der Sensorvorrichtung zurückreflektierten ersten Teils des ersten Messsignals und des von dem zweiten Reflektor zu der Sensorvorrichtung zurückreflektierten zweiten Teils des ersten Messsignals ergibt sich allein aus dem Zweifachen des Abstands L. Dabei ist das Reflektorbauteil mit den beiden Reflektoren sehr maßgenau, also mit sehr engen Toleranzen, herstellbar. Der gewünschte Abstand L kann sehr präzise und gut wiederholbar realisiert werden. Des Weiteren haben Toleranzen und Ungenauigkeiten der Position und Lage des Reflektorbauteils als Ganzes relativ zu der Sensorvorrichtung keinen nennenswerten Einfluss auf die Messgenauigkeit.

Mit der vorliegenden Erfindung wird außerdem ein möglicher Einfluss der mit einer vergleichsweise größeren Toleranz behafteten Wandstärke des Tankgehäuses vermieden, da das emittierte erste Messsignalsignal auf dem Weg zum Reflektorbauteil und sowohl der erste Teil als auch der zweite Teil auf dem Weg zurück zu der Sensorvorrichtung das Tankgehäuse jeweils an derselben Stelle durchlaufen. Da für die erfindungsgemäße Bestimmung der Konzentration lediglich die zeitliche Verzögerung zwischen dem ersten Teil und dem zweiten Teil zu betrachten ist, hat der für beide Teile jeweils gleiche Zeitanteil der Laufzeit durch die Wandung des Tankgehäuses keinen Einfluss auf die Messwertbildung, so dass das Messergebnis nicht von der Wandstärke des Tankgehäuses an dieser Stelle abhängt.

Daher ist mit der vorliegenden Erfindung eine Montage der Sensorvorrichtung außerhalb des Tankgehäuses möglich, insbesondere außerhalb des Innenraums des Tankgehäuses. Dadurch ergibt sich ein leichter Ein- und Ausbau sowie gegebenenfalls ein leichter Austausch der Sensorvorrichtung. Außerdem wird ein direkter Kontakt der Sensorvorrichtung mit der in dem Innenraum des Tankgehäuses aufbewahrten Lösung und insbesondere mit dem darin enthaltenen Reduktionsmittel vermieden. So wird einer Korrosion der Sensorvorrichtung durch die Lösung bzw. das Reduktionsmittel vorgebeugt. Ferner ist die empfindliche Messvorrichtung nicht unmittelbar schnellen Temperaturveränderungen durch das Einfüllen von neuer Lösung mit einer anderen Temperatur ausgesetzt. Insgesamt verbessert die Anordnung der Sensorvorrichtung an der Außenseite des Tankgehäuses also die Langlebigkeit der Sensorvorrichtung.

Bei der Lösung kann es sich insbesondere um eine wässrige Lösung mit Harnstoff handeln, wobei der Harnstoff das Reduktionsmittel darstellt.

Es versteht sich von selbst, dass die Sensorvorrichtung das erste Messsignal nicht ausschließlich nur genau in Richtung der ersten Emissionsrichtung emittieren muss. Vielmehr ist es im Sinne der vorliegenden Anmeldung, wenn sich das erste Messsignal von der Sensorvorrichtung ausgehend entlang der Emissionsrichtung mit einem Strahlungskegel um die Emissionsrichtung ausbreitet.

Die Vorrichtung kann beispielsweise in einem Kraftfahrzeug mit Verbrennungsmotor montiert sein, wobei der Harnstoff zur Erzeugung von Ammoniak für eine Abgasnachbehandlung genutzt wird. Insbesondere kann es sich bei dem Verbrennungsmotor um einen Dieselmotor handeln.

Das Tankgehäuse kann im Rotationsschmelzverfahren hergestellt sein. Als Materialien für das Tankgehäuse können beispielsweise Polyethylen (PE) und/oder Polyamid (PA) verwendet werden. Diese Materialien sind gut verfügbar, werden durch die Lösung nicht angegriffen, sind gut verarbeitbar und ausreichend dauerhaft. In einem in einer Einbaulage unteren Bereich des Tankgehäuses kann ein Auslass und/oder Ventil zur Abnahme der Lösung aus dem Innenraum des Tanks vorgesehen sein. Durch die Positionierung in dem unteren Bereich kann auch dann Lösung aus dem Innenraum entnommen werden, wenn ein Füllstand der Lösung in dem Innenraum gering ist. An einem in Einbaulage oberen Bereich des Tankgehäuses kann ein Einlass zur Zuführung von Lösung in den Innenraum des Tanks angeordnet sein.

Das Tankgehäuse weist eine sich im Wesentlichen in Richtung des Innenraums erstreckende Einbuchtung auf, durch die an der Außenseite des Tankgehäuses eine Einbauvertiefung zur Aufnahme der Sensorvorrichtung ausgebildet ist, wobei die Sensorvorrichtung in der Einbauvertiefung angeordnet ist.

Damit ist die Sensorvorrichtung sicher an der Außenseite des Tankgehäuses angebracht. Durch die Aufnahme in der Einbauvertiefung fällt die Vorrichtung insgesamt kompakter aus und kann leichter integriert werden, insbesondere in Kraftfahrzeuge. Außerdem ist die Sensorvorrichtung durch die Aufnahme in die Einbauvertiefung besser vor Umwelteinflüssen geschützt, so dass die Vorrichtung insgesamt robuster und zuverlässiger wird.

Bevorzugt liegt der Abstand L in einem Bereich von 20 mm bis 50 mm. Dies gilt insbesondere dann, wenn als erstes Messsignal ein erstes Ultraschallsignal verwendet wird. Wird der Abstand L zu gering, lässt sich die zeitliche Verzögerung zwischen dem ersten Teil und dem zweiten Teil nicht mehr sauber detektieren. Bei sehr großem Abstand L dagegen besteht die Gefahr, dass ein zu großer Raumwinkelbereich des ersten Messsignals an dem ersten Reflektor zurückreflektiert und/oder ausgeblendet wird. Auch von dem zweiten Teil, der auf dem Rückweg von dem zweiten Reflektor zur der Sensorvorrichtung ist, kann dann ein zu großer Raumwinkelbereich durch den ersten Reflektor ausgeblendet werden. In der Folge ist der zweite Teil, der von der Sensorvorrichtung empfangen wird, nur noch sehr klein. Das kann seine Messung erheblich erschweren. Wenn der Abstand L kleiner oder gleich 50 mm ist, ist das Reflektorbauteil außerdem ausreichend kompakt, um problemlos in dem Innenraum des Tankgehäuses untergebracht zu werden.

Gemäß der Erfindung weist die Einbuchtung eine bottichartige Grundform auf, wobei die Sensorvorrichtung das erste Messsignal entlang der Emissionsrichtung zumindest im Wesentlichen senkrecht zu der Seitenwand der Einbuchtung emittiert.

Eine derart geformte Einbuchtung ist vergleichsweise einfach herstellbar. Die Einbauvertiefung wird durch die Bodenwand der Einbuchtung sowie die Seitenwand der Einbuchtung begrenzt, die jeweils einen Teil des Tankgehäuses bilden. Die Einbuchtung kann bei einer Fertigung des Tankgehäuses unmittelbar mit angeformt werden. Alternativ kann die Einbuchtung als vorgefertigtes Element in ein Werkzeug eingelegt werden und dann in das Tankgehäuse eingesintert werden. Durch eine Öffnung der Einbauvertiefung, die ein dem Innenraum des Tankgehäuses abgewandtes, nach außen offenes Ende der Einbauvertiefung bildet, kann die Sensorvorrichtung einfach in die Einbauvertiefung eingesetzt werden. Indem die Sensorvorrichtung das erste Messsignal zumindest im Wesentlichen senkrecht zu der Bodenwand oder der Seitenwand der Einbuchtung emittiert, ist der Weg durch die Wandung des Tankgehäuses in den Innenraum besonders kurz, so dass das erste Messsignal beim Durchlaufen des Tankgehäuses nur wenig gedämpft wird.

Besonders bevorzugt ist zumindest ein unterer Teil des Tankgehäuses einstückig und wannenförmig ausgeführt, wobei die Einbuchtung in dem unteren Teil gebildet ist.

Damit ist das Tankgehäuse besonders einfach, schnell und kostengünstig herstellbar. Indem der untere Teil einstückig ausgeführt ist, ist es besonders robust und seine Dichtigkeit ist langfristig sichergestellt. Der gesamte untere Teil des Tankgehäuses besteht aus einem integralen, durchgehenden Teil. Insbesondere ist die Einbuchtung einstückig und integral mit dem unteren Teil ausgebildet. Insbesondere muss ein Boden des Tanks oder ein Teil des Bodens des Tanks oder die Einbuchtung nicht angeklebt, eingehakt, angeschraubt oder anderweitig gefügt und abgedichtet werden. Durch Temperaturveränderungen, mechanische Belastungen wie Vibrationen, Alterung von Kleber oder ähnliche Faktoren sind derart zusammengesetzte Tankgehäuse anfällig für Undichtigkeiten und Defekte. Das wird mit der vorgeschlagenen Ausführungsform vermieden. Selbstverständlich können in dem unteren Teil des Tankgehäuses gegebenenfalls aber Zusatzelemente vorgesehen sein, insbesondere der Auslass und/oder das Ventil zur Abnahme der Lösung.

Überaus bevorzugt ist die Einbuchtung in einem Wannenboden gebildet.

Wenn die Einbuchtung in dem Wannenboden gebildet ist, dann ist auch die darin aufgenommene Sensorvorrichtung in geringem Abstand von dem Wannenboden angebracht. Damit kann die Sensorvorrichtung das erste Messsignal auch dann in die Lösung emittieren, wenn der Füllstand der Lösung in dem Innenraum des Tankgehäuses niedrig ist.

Überaus bevorzugt ist das Reflektorbauteil an dem unteren Teil, insbesondere an dem Wannenboden, angeordnet.

Auf diese Weise ist sichergestellt, dass der erste Reflektor und der zweite Reflektor auch dann noch in der Lösung eingetaucht sind, wenn der Füllstand der Lösung in dem Innenraum des Tankgehäuses niedrig ist.

Insbesondere wenn die Einbuchtung in dem Wannenboden gebildet ist und das Reflektorbauteil an dem Wannenboden angeordnet ist, ist eine zuverlässige Messung der Konzentration des Reduktionsmittels in der Lösung auch bei niedrigem Füllstand der Lösung in dem Innenraum sichergestellt.

In einer weiteren, besonders bevorzugten Ausführungsform der Erfindung ist die Sensorvorrichtung über eine Gewindeverbindung oder über eine Bajonettverbindung in der Einbauvertiefung befestigt.

Auf diese Weise lässt sich die Sensorvorrichtung einfach, sicher und schnell in der Einbauvertiefung montieren. Insbesondere kann die Sensorvorrichtung auch lösbar in der Einbauvertiefung montiert sein. In diesem Fall kann sie bei Defekten einfach und schnell ausgetauscht werden. Das erhöht die Wirtschaftlichkeit. Außerdem kann sie gegebenenfalls durch eine verbesserte Sensorvorrichtung ersetzt werden. Die Vorrichtung ist folglich insgesamt modular und flexibel.

In einer Weiterbildung der Erfindung umfasst die Sensorvorrichtung einen ersten Ultraschallsensor, der mit einer Sensorfläche an der Außenseite des Tankgehäuses anliegt.

Die Verwendung eines Ultraschallsensors ermöglicht eine einfache, schnelle, robuste und zuverlässige Messung der Konzentration. Ultraschallsensoren sind kostengünstig und in verschiedenen Ausführungen erhältlich sowie vergleichsweise einfach zu implementieren und zu bedienen. Sie eignen sich zur zuverlässigen Detektion der zeitlichen Verzögerung des zweiten Teils gegenüber dem ersten Teil. Des Weiteren kann im Vergleich zu optischen Messungen mit Licht eine weniger aufwendige Messerfassung genutzt werden, da die Schallgeschwindigkeit von Ultraschallsignalen deutlich geringer ist als die Lichtgeschwindigkeit und somit die zeitliche Verzögerung bei gleichem Abstand L deutlich größer ist.

Besonders bevorzugt ist die Sensorvorrichtung derart in der Einbauvertiefung montiert, dass die Sensorfläche mit einem Anpressdruck an der Außenseite des Tankgehäuses anliegt.

Damit werden einerseits Signalverluste durch zusätzliche, dazwischen liegende Bauteile und andererseits zusätzliche Kosten für solche Bauteile vermieden.

In einer weiteren, vorteilhaften Ausführungsform der Erfindung umfasst die Sensorvorrichtung einen ersten Ultraschallsensor, der mit einer Sensorfläche an einem Koppelelement anliegt, wobei eine der Sensorfläche abgewandte Seite des Koppelelements an der Außenseite des Tankgehäuses anliegt.

In diesem Fall ist die Sensorfläche des Ultraschallsensors durch das Koppelelement schallleitend mit dem Tankgehäuse verbunden, welches eine verlustarme Propagation des ersten Messsignals, des ersten Teils sowie des zweiten Teils zwischen dem Tankgehäuse und der Sensorfläche sicherstellt. Das Koppelelement kann insbesondere nachgiebig, beispielsweise elastisch oder viskoelastisch, ausgeführt sein. Dann kann es sich Veränderungen eines Abstands zwischen der Sensorfläche und der Außenseite des Tankgehäuses flexibel anpassen, so dass auch bei Verwindungen oder Maßänderungen durch Temperaturveränderungen, Veränderungen des Füllstands der Lösung im Innenraum des Tankgehäuses und/oder Lageänderungen des Tankgehäuses die verlustarme Propagation sichergestellt bleibt. Das Koppelelement kann bspw. aus einem Silikongel oder einem Silikonelastomer bestehen.

Besonders bevorzugt ist die Sensorvorrichtung derart in der Einbauvertiefung montiert, dass das Koppelelement mit einem Anpressdruck an der Außenseite des Tankgehäuses anliegt.

Dadurch werden ein steter sowie zuverlässiger Kontakt des Koppelelements mit der Außenseite des Tankgehäuses und eine gute Übertragung der Ultraschallsignale zwischen dem Koppelelement und dem Tankgehäuse sichergestellt.

Überaus bevorzugt wird der Anpressdruck bei dem Befestigen der Sensorvorrichtung in der Einbauvertiefung mittels der Gewindeverbindung oder der Bajonettverbindung hergestellt.

Bei einer Ausgestaltung der Erfindung kann die Einbauvertiefung und/oder die Sensorvorrichtung konisch ausgestaltet sein. Ein "seitlich" an der Sensorvorrichtung angeordneter Sensor oder ein "oben" an der Sensorvorrichtung angeordneter Sensor wird in diesem Fall dadurch angepresst, dass die Sensorvorrichtung durch die Steigung des Gewindes bzw. der Eingriffselemente der Bajonettmechanik bei der Drehung in axialer Richtung tiefer in die Einbauvertiefung hinein bewegt wird. Für "oben" angeordnete Sensoren/Koppelelemente wird in der Regel (nur) dieser Gang-/Steigungseffekt genutzt.

Für "seitlich" angeordnete Sensoren oder Koppelelemente wird die Einbauvertiefung und/oder die Sensorvorrichtung bevorzugt so gestaltet, dass sich bei der Verdrehung der Sensorvorrichtung entlang einer Eindrehrichtung zunächst eine Verringerung eines Spalts zwischen dem Koppelement und der Seitenwand der Einbauvertiefung ergibt, bis das Koppelelement die Seitenwand berührt. Bei noch weiterem Verdrehen der Sensorvorrichtung entlang der Eindrehrichtung liegt das Koppelelement dann mit größer werdendem Anpressdruck an der Seitenwand an. So wird erreicht, dass sich durch die Verdrehung der Sensorvorrichtung bei der Montage auch der notwendige Anpressdruck zwischen dem Tankgehäuse und dem Sensor oder dem Koppelement ergibt.

Für "seitlich" angeordnete Sensoren oder Koppelelemente ist daher eine Anordnung bevorzugt, bei der die Sensorvorrichtung bspw. rund ist, während die Einbauvertiefung einen im Wesentlichen runden Innenumfang aufweisen kann, auf den jedoch zumindest auf Höhe des Koppelelements eine "Rampe" (d.h. eine Steigung in radialer Richtung entlang des Umfangs) aufgebracht ist. Bei Verdrehung der Sensorvorrichtung relativ zu der Einbauvertiefung wird der Sensor bzw. das Koppelelement verkeilt.

Alternativ kann die Einbauvertiefung bspw. auch elliptisch ausgeführt sein. Beim Einsetzen der Sensorvorrichtung in die Einbauvertiefung ist die Verbindungslinie von der Achse der Sensorvorrichtung zu dem Sensor oder dem Koppelelement zunächst im Wesentlichen parallel zur Hauptachse der Ellipse ausgerichtet. Eine Verdrehung der Sensorvorrichtung um einen Drehwinkel führt zu einer relativen Orientierung, bei der diese Verbindungslinie dann quer, insbesondere rechtwinklig, zu der Hauptachse angeordnet ist.

Alternativ ist es auch möglich, sowohl die Einbauvertiefung wie das Sensorgehäuse unrund, bspw. elliptisch, auszuführen. Die Hauptachsen der Ellipsen sind beim Einsetzen der Sensorvorrichtung in die Einbauvertiefung zunächst im Wesentlichen parallel und im montierten Zustand quer zueinander ausgerichtet.

Eine weitere Möglichkeit besteht darin, die Sensorvorrichtung exzentrisch in der Einbauvertiefung anzuordnen.

Der Anpressdruck wird also durch die rotatorische und/oder die axiale Relativbewegung zwischen der Sensorvorrichtung und der Einbauvertiefung bei der Montage, insbesondere unter Herstellung der Gewindeverbindung oder der Bajonettverbindung, erzeugt. Insofern wird ein Synergieeffekt erzielt.

Zur Erzeugung und/oder Detektion von Ultraschall können piezoelektrische Keramiken, Quarz und/oder piezoelektrischer Kunststoff genutzt werden.

Vorzugsweise liegt das erste Messsignal des Ultraschallsensors in einem Frequenzbereich von 100 kHz bis 10 GHz, noch bevorzugter in einem Frequenzbereich von 100 kHz bis 1 GHz. Diese Frequenzbereiche erlauben eine ausreichend genaue Ermittlung der Konzentration des Reduktionsmittels in der Lösung.

In Weiterbildung der Erfindung ist das Reflektorbauteil aus einem Material mit geringem Wärmeausdehnungskoeffizienten hergestellt, wobei der Wärmeausdehnungskoeffizient kleiner ist als ein Wärmeausdehnungskoeffizient des Tankgehäuses und/oder kleiner als oder gleich $100 \cdot 10^{-6}$ $K^{-1}$ - besonders bevorzugt kleiner oder gleich $20 \cdot 10^{-6}$ $K^{-1}$, überaus bevorzugt kleiner oder gleich $15 \cdot 10^{-6}$ $K^{-1}$ - ist. Wenn eine besonders hohe Genauigkeit der Messung notwendig ist, kann das Reflektorbauteil auch aus einem Material mit einem Wärmeausdehnungskoeffizienten kleiner oder gleich $10 \cdot 10^{-6}$ $K^{-1}$ hergestellt sein. Um leicht verfügbares und kostengünstiges Material verwenden zu können, ist der Wärmeausdehnungskoeffizient andererseits überaus bevorzugt größer $1 \cdot 10^{-6}$ $K^{-1}$, so dass sich entsprechende nach oben und nach unten beschränkte Bereiche für den Wärmeausdehnungskoeffizienten ergeben.

Durch einen geringen Wärmeausdehnungskoeffizienten des Reflektorbauteils ist sichergestellt, dass sich der Abstand L zwischen dem ersten Reflektor und dem zweiten Reflektor bei Temperaturwechseln nur in geringem Maße ändern. Dadurch ist eine genauere Bestimmung der Konzentration des Reduktionsmittels in der Lösung auch für unterschiedliche Temperaturen der Lösung möglich.

Insbesondere kann das Reflektorbauteil aus einem Metall hergestellt sein, beispielsweise aus Edelstahl, Eisen oder Aluminium. Alternativ kann das Reflektorbauteil aus anderen gegen die Lösung beständigen und zur Reflexion des Messsignals geeigneten Werkstoffen bestehen.

Das Tankgehäuse kann wie oben beschrieben beispielsweise aus Polyethylen (PE) oder aus Polyamid (PA) gefertigt sein. Ein typischer Wärmeausdehnungskoeffizient für Polyethylen beträgt $200 \cdot 10^{-6}$ $K^{-1}$, ein typischer Wärmeausdehnungskoeffizient für Polyamid $110 \cdot 10^{-6}$ $K^{-1}$. Typische Wärmeausdehnungskoeffizienten von Edelstahl, Eisen und Aluminium betragen in dieser Reihenfolge $10 \cdot 10^{-6}$ $K^{-1}$ bis $16 \cdot 10^{-6}$ $K^{-1}$, $10 \cdot 10^{-6}$ $K^{-1}$ bis $12 \cdot 10^{-6}$ $K^{-1}$ und $23 \cdot 10^{-6}$ $K^{-1}$. Damit weisen diese Metalle wesentlich geringere Wärmeausdehnungskoeffizienten auf als die der genannten Materialien für das Tankgehäuse. Andererseits sind ihre Wärmeausdehnungskoeffizienten auch absolut gesehen gering genug für eine gute Messgenauigkeit. Zudem sind diese Materialien vergleichsweise kostengünstig, einfach erhältlich und gut verarbeitbar.

In einer Weiterbildung der Erfindung besteht das Reflektorbauteil aus einem zumindest in einem Teilbereich mit Kunststoff beschichteten Metallelement. Als mit Kunststoff beschichtet gilt im Sinne dieser Anmeldung insbesondere auch, wenn das Reflektorbauteil zumindest in einem Teilbereich mit Kunststoff umspritzt ist.

Die Kunststoffbeschichtung erhöht die chemische Beständigkeit des Reflektorbauteils und/oder erleichtert die Verbindung oder Integration des Reflektorbauteils mit dem Tankgehäuse.

In einer besonders vorteilhaften Weiterbildung der Erfindung ist das Tankgehäuse im Rotationsschmelzverfahren hergestellt. Bevorzugt ist das Reflektorbauteil zumindest teilweise in das Tankgehäuse eingesintert, äußerst bevorzugt in den Wannenboden.

Dadurch ist das Reflektorbauteil sicher und dauerhaft an dem Tankgehäuse angebracht. Auch bei Temperaturschwankungen, Vibrationen und anderen Belastungen besteht keine Gefahr, dass sich das Reflektorbauteil verschiebt oder von dem Tankgehäuse löst. Dadurch wird die Zuverlässigkeit der Messung wesentlich verbessert. Zugleich ermöglicht dieser Aufbau eine einfache, schnelle und kostengünstige Herstellung der Vorrichtung.

Insbesondere kann das Reflektorbauteil aus einem Metallelement aufgebaut sein, welches im Bereich eines Kunststofffußes mit einem Kunststoff beschichtet ist und im Bereich der Kunststoffbeschichtung bei der Rotationsfertigung in die Behälterwandung eingesintert wird.

Grundsätzlich kann das Reflektorbauteil aber auch auf eine andere Art und Weise an einer Innenwand des Tankgehäuses befestigt sein, beispielsweise innen an das Tankgehäuse angeschraubt sein.

Wenn die Lösung in einem Innenraum des Tankgehäuses einen Flüssigkeitsspiegel ausbildet, emittiert die Sensorvorrichtung bei einer bevorzugten Ausführungsform der Erfindung, ein Messsignal zur Füllstandsmessung, welches direkt oder über eine Umlenkeinheit in Richtung des Flüssigkeitsspiegels gerichtet ist und einen aus dem ersten Messsignal ausgekoppelten dritten Teil des ersten Messsignals oder ein von einem zweiten Sensor emittiertes zweites Messsignal umfasst.

Auf diese Weise kann die Vorrichtung zugleich den Füllstand der Lösung in dem Innenraum des Tankgehäuses messen. Die Vorrichtung kann dazu eingerichtet sein, bei Unterschreiten eines bestimmten Füllstandes eine Warnung zu generieren.

Bevorzugt umfasst die Vorrichtung eine mit der Sensorvorrichtung verbundene oder in die Sensorvorrichtung integrierte Auswerteeinheit zur Ermittlung der Konzentration des Reduktionsmittels in der Lösung unter Berücksichtigung der zeitlichen Verzögerung des Empfangs des zweiten Teils des ersten Messsignals, der von dem zweiten Reflektor zu der Sensorvorrichtung zurückreflektiert wird, gegenüber dem Empfang des ersten Teils des ersten Messsignals, der von dem ersten Reflektor zu der Sensorvorrichtung zurückreflektiert wird, sowie des Abstands L.

Mit der Auswerteeinheit kann aus den Messungen des ersten Teils und des zweiten Teils wie oben beschrieben die Konzentration des Harnstoffs in der Lösung ermittelt werden.

Besonders bevorzugt ist ein mit der Auswerteeinheit verbundener Temperatursensor zur Messung einer Temperatur im Innenraum des Tankgehäuses oder als Bestandteil der Sensorvorrichtung vorgesehen, wobei die Auswerteeinheit zur Ermittlung der Konzentration eine Temperaturabhängigkeit einer Geschwindigkeit des ersten Messsignals, des zurückreflektierten ersten Teils und des zurückreflektierten zweiten Teils in der Lösung, beispielsweise eine Schallgeschwindigkeit in der Lösung, berücksichtigt.

Die Geschwindigkeit des ersten Messsignals, des zurückreflektierten ersten Teils und des zurückreflektierten zweiten Teils in der Lösung hängt im Allgemeinen von der Temperatur der Lösung ab. Das gilt insbesondere für die Schallgeschwindigkeit von Ultraschallsignalen. Mit der vorgeschlagenen Ausführung kann die Temperatur bei der Berechnung der Konzentration des Reduktionsmittels aus der zeitlichen Verzögerung des Empfangs des zweiten Teils gegenüber dem Empfang des ersten Teils berücksichtigt werden. Dadurch wird die Konzentration des Reduktionsmittels in der Lösung auch bei wechselnden Temperaturen besonders genau und zuverlässig ermittelt.

In einer Weiterbildung der Erfindung umfasst die Sensorvorrichtung wenigstens ein Kontaktelement, welches in Einbaulage in elektrischem oder thermischem Kontakt zu einem an dem Tankgehäuse angeordneten Gegenkontakt steht.

Das wenigstens eine Kontaktelement kann dazu genutzt werden, eine elektrische Verbindung zwischen der Sensorvorrichtung und dem Tankgehäuse oder zu mindestens einer in dem Tankgehäuse untergebrachten elektronischen Komponente zu realisieren. Insbesondere kann mittels des wenigstens einen Kontaktelements der Temperatursensor elektrisch mit der Sensorvorrichtung verbunden werden, wenn dieser elektronisch ist und in dem Tankgehäuse und/oder in dem Innenraum des Tankgehäuses vorgesehen ist.

Das wenigstens eine Kontaktelement kann alternativ dazu genutzt werden, eine thermische Verbindung zwischen dem Tankgehäuse und/oder dem Innenraum und/oder der Lösung in dem Innenraum einerseits und einem in oder an der Sensorvorrichtung vorgesehenen Temperatursensor andererseits herzustellen. In diesem Fall können mehrere oder sämtliche Sensoren (insbesondere zur Messung von Konzentration, Füllstand und Temperatur) in der Sensorvorrichtung zusammengefasst sein, so dass auf einen separaten Temperatursensor in oder an dem Tankgehäuse verzichtet werden kann.

Selbstverständlich kann das mindestens eine Kontaktelement auch sowohl thermisch wie auch elektrisch leitend sein, oder die Sensorvorrichtung kann mehrere elektrisch und/oder thermisch leitfähige Kontaktelemente aufweisen.

Die Erfindung wird nachfolgend anhand von Ausführungsbeispielen und mit Bezug auf die Figuren erläutert. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbezügen.

Es zeigen schematisch:

Fig. 1    ein erfindungsgemäßes Ausführungsbeispiel einer Vorrichtung zum Messen einer Konzentration eines Reduktionsmittels in einer Lösung in einer Schnittansicht von der Seite, wobei ein Innenraum eines Tankgehäuses teilweise mit der Lösung gefüllt ist,

Fig. 2A    einen Ausschnitt aus Fig. 1 mit einer Sensorfläche und einem Reflektorbauteil,

Fig. 2B, 2C    das Messprinzip der Vorrichtung aus Fig. 1,

Fig. 3A bis 3C    jeweils eine alternative Ausführungsform für ein Reflektorbauteil der Vorrichtung aus Fig. 1,

Fig. 4A    das Anbringen einer Sensorvorrichtung in einer Einbauvertiefung an einer Außenseite des Tankgehäuses für die Vorrichtung aus Fig. 1 in einer Schnittansicht von der Seite,

Fig. 4B    einen vergrößerten Ausschnitt von Fig. 4A mit der Einbauvertiefung zur Aufnahme der Sensorvorrichtung,

Fig. 5A    die Vorrichtung aus Fig. 4A und 4B mit an dem Tankgehäuse angebrachter Sensorvorrichtung und somit die Vorrichtung aus Fig. 1, jedoch ohne Lösung in dem Innenraum des Tankgehäuses,

Fig. 5B    eine Vergrößerung eines Ausschnitts A in Fig. 5A,

Fig. 5C    die Vorrichtung aus Fig. 1 und 5A in Ansicht von unten,

Fig. 6A    eine Installationsbewegung zum Anbringen der Sensorvorrichtung in einer Einbauvertiefung mit einem im Wesentlichen kreisförmigen Innenumfang mittels eines Bajonettverschlusses in Ansicht von unten,

Fig. 6B    die Darstellung gemäß Fig. 6A bei einer Einbauvertiefung mit einer wenigstens bereichsweise am Innenumfang vorgesehenen Rampe,

Fig. 7A    die Sensorvorrichtung der Vorrichtung aus Fig. 1 mit zwei Koppelelementen in Aufsicht,

Fig. 7B    eine weitere Ausführungsform der Sensorvorrichtung für die Vorrichtung aus Fig. 1 mit nur einem Koppelelement,

Fig. 7C    eine weitere Ausführungsform der Sensorvorrichtung für die Vorrichtung aus Fig. 1 mit einem Koppelelement und zwei Federkontakten,

Fig. 8    eine weiteres erfindungsgemäßes Ausführungsbeispiel für eine Vorrichtung zum Messen einer Konzentration eines Reduktionsmittels in einer Lösung in einer Schnittansicht von der Seite, die gegenüber der Vorrichtung aus Fig. 1 zusätzlich eine Auswerteeinheit und einen Temperatursensor aufweist.

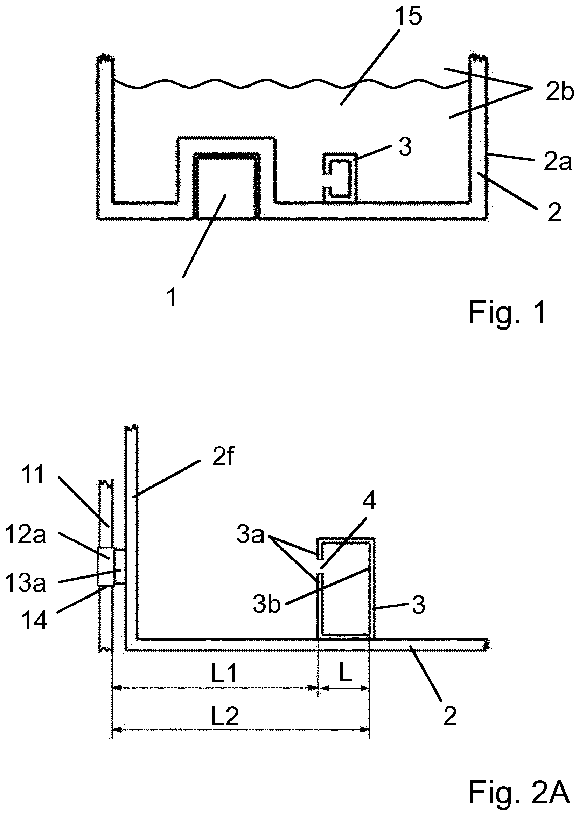

Fig. 1 zeigt ein erfindungsgemäßes Ausführungsbeispiel einer Vorrichtung zum Messen einer Konzentration eines Reduktionsmittels in einer Lösung 15 in einer Schnittansicht von der Seite. Die Vorrichtung ist genauer dazu eingerichtet, die Konzentration von Harnstoff in einer wässrigen Lösung zu messen.

Ein Innenraum 2b eines Tankgehäuses 2 der Vorrichtung ist in Fig. 1 teilweise mit der wässrigen Lösung 15 gefüllt, die als Reduktionsmittel Harnstoff enthält. Solche Lösungen werden häufig zur Abgasnachbehandlung in Verbrennungsmotoren eingesetzt, insbesondere für Dieselmotoren.

Der abgebildete, untere Teil des Tankgehäuses 2, in dem sich die Lösung 15 befindet, ist einstückig als Wanne ausgeführt. Er ist nach unten durch einen Wannenboden und seitlich durch eine Wannenwand begrenzt. Im Bereich des Wannenbodens oder eines unteren Endes der Wannenwand ist eine Auslassvorrichtung (nicht gezeigt) vorgesehen, beispielsweise ein Auslass oder ein Ventil, über welche die Lösung 15 aus dem Innenraum 2b des Tankgehäuses 2 entnommen werden kann. An einer Oberseite des Tankgehäuses 2 (nicht gezeigt) ist eine Befüllvorrichtung, bspw. ein Einfüllstutzen, vorgesehen, über die neue Lösung 15 in den Innenraum 2b eingebracht wird.

Im Bereich des Wannenbodens ist an einer Außenseite 2a des Tankgehäuses 2 eine Sensorvorrichtung 1 angebracht. Die Sensorvorrichtung 1 befindet sich außerhalb des Innenraums 2b und steht damit nicht in direktem Kontakt mit der Lösung 15.

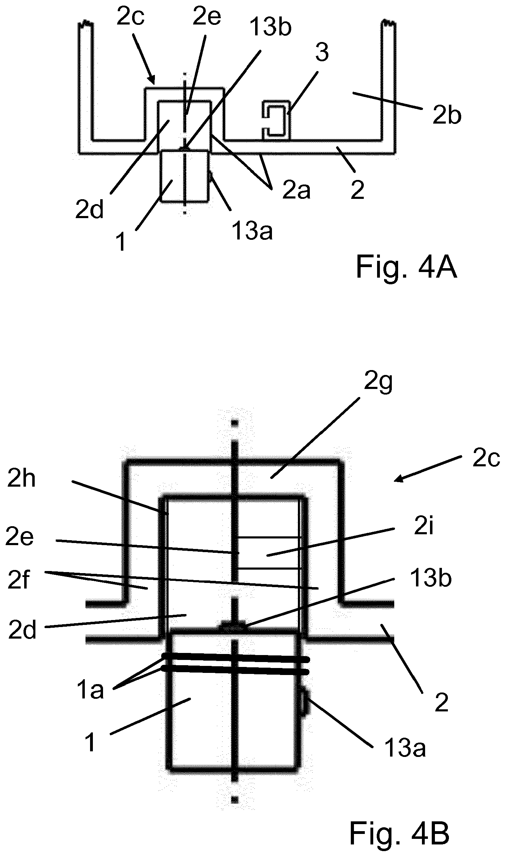

In Fig. 4A und Fig. 4B ist dargestellt, wie die Sensorvorrichtung 1 in einer Einbauvertiefung 2d angebracht wird. Das Tankgehäuse 2 weist im Bereich des Wannenbodens eine Einbuchtung 2c auf, die sich in Richtung des Innenraums 2b des Tankgehäuses 2 erstreckt. Die Einbuchtung 2c bildet in ihrem Inneren die Einbauvertiefung 2d an der Außenseite 2a in dem Wannenboden aus. Im vorliegenden Ausführungsbeispiel weist die Einbuchtung 2c eine bottichartige Grundform auf, deren Öffnung nach unten zeigt. Die Einbuchtung 2c ist im Wesentlichen rotationssymmetrisch um eine Mittelachse 2e und wird von einer zylindrischen Seitenwand 2f und einer kreisscheibenförmigen Bodenwand 2g begrenzt. Sie bildet einen Teil des Tankgehäuses 2. Es sind jedoch auch andere Formen der Einbuchtung 2c möglich. Die Einbuchtung 2 kann bei einer Fertigung des Tankgehäuses 2 unmittelbar mit angeformt werden oder als vorgefertigtes Element in ein Werkzeug eingelegt und dann in das Tankgehäuse 2 eingesintert werden.

Die Sensorvorrichtung 1 weist eine zylindrische Grundform mit einem Radius auf, der etwas geringer ist als ein Radius der Einbauvertiefung 2d um die Mittelachse 2e. Außerdem entspricht eine Höhe der Sensorvorrichtung 1 entlang ihrer Rotationssymmetrieachse vorzugsweise einer Tiefe der Einbauvertiefung 2d in Richtung ihrer Mittelachse 2e. Dadurch wird die Sensorvorrichtung 1 passend und bündig in die Einbauvertiefung 2d aufgenommen.

An der Sensorvorrichtung 1 ist ein Außengewinde 1a vorgesehen, das mit einem Innengewinde 2h in der Einbauvertiefung 2d in Eingriff gebracht wird. Dadurch wird die Sensorvorrichtung 1 in der Einbauvertiefung 2d lösbar befestigt. Zugleich sorgt die dadurch entstehende Gewindeverbindung dafür, dass die Sensorvorrichtung 1 über die Koppelemente 13a, 13b jeweils mit einem Anpressdruck an der Außenseite 2a des Tankgehäuses 2 anliegt.

Grundsätzlich kann in einer anderen Ausführungsform (nicht gezeigt) auf die Koppelelemente 13a, 13b verzichtet werden. Das bietet sich insbesondere dann an, wenn die Einbauvertiefung 2d und die Sensorvorrichtung 1 sehr passgenau gefertigt sind.

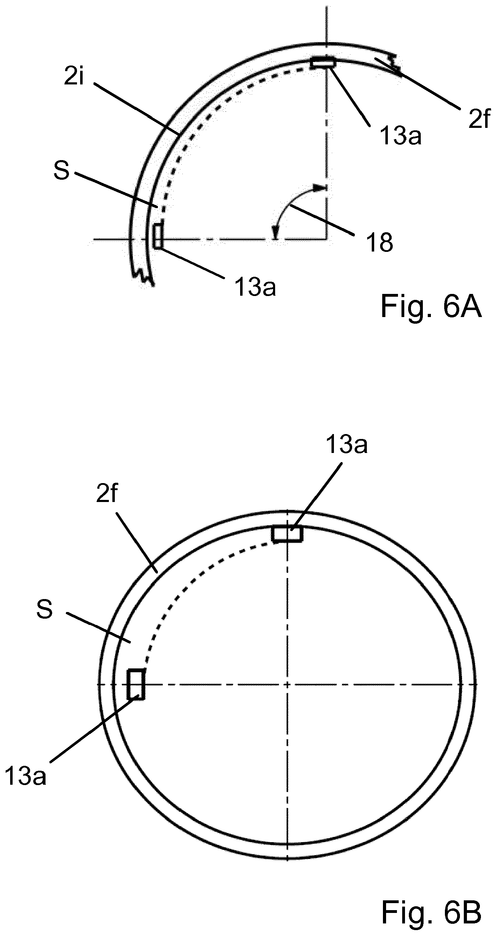

Für eine einfache Montage und zur Sicherstellung der Anpressdrücke der Koppelemente 13a, 13b ist eine weitere Lösung zur Befestigung der Sensorvorrichtung 1 in Fig. 6A dargestellt. Für die Montage der Sensorvorrichtung 1 (deren Gehäuse 11 hier zur besseren Darstellung nicht gezeichnet ist) in der Einbauvertiefung 2d wird die Sensorvorrichtung 1 mit den vorstehenden Koppelementen 13a und 13b zunächst längs der Mittelachse 2e soweit wie möglich in die Einbauvertiefung 2d eingeführt und dann gemäß Fig. 6A um einen Drehwinkel 18 verdreht. In Fig. 6A beträgt der vorgesehene Drehwinkel 18 beispielsweise 90°. Dabei erfolgt die Befestigung durch einen Bajonettverschluss oder ein Gewinde unter gleichzeitiger Herstellung des Anpressdrucks. Die Einbauvertiefung und/oder die Sensorvorrichtung sind dazu bevorzugt so gestaltet, dass sich bei der Verdrehung der Sensorvorrichtung 1 entlang einer Eindrehrichtung zunächst eine Verringerung eines Spalts S zwischen dem Koppelement 13a und der Seitenwand 2f der Einbauvertiefung 2d ergibt, bis das Koppelelement 13a die Seitenwand 2f berührt. Bei noch weiterem Verdrehen der Sensorvorrichtung 1 entlang der Eindrehrichtung liegt das Koppelelement 13a dann mit größer werdendem Anpressdruck an der Seitenwand 2f an. So wird erreicht, dass sich durch die Verdrehung der Sensorvorrichtung 1 bei der Montage auch der notwendige Anpressdruck zwischen dem Tankgehäuse 2a und dem Koppelelement 13a ergibt. Abgesehen davon ermöglicht die Bajonett- oder Gewindeverbindung ein nachträgliches Lösen und damit einen Austausch der Sensorvorrichtung 1.

Um die Anpressdrücke genauer einzustellen, können die Sensorvorrichtung 1 und/oder die Einbauvertiefung 2d eine leicht konische Form aufweisen. Ein "seitlich" angeordneter Sensor 12a oder ein "oben" angeordneter Sensor 12b wird in diesem Fall dadurch angepresst, dass die Sensorvorrichtung 1 durch die Steigung des Gewindes bzw. der Eingriffselemente der Bajonettmechanik bei der Drehung tiefer in die Einbauvertiefung 2d hinein bewegt wird. Für "oben" angeordnete Sensoren/Koppelelemente wird i.d.R. (nur) dieser Gang-/ Steigungseffekt genutzt werden können.

Für "seitliche" Sensoren 12a oder Koppelelemente 13a ist jedoch eine Anordnung bevorzugt, bei der die Sensorvorrichtung 1 bspw. rund ist, während die Einbauvertiefung 2d einen im Wesentlichen runden Innenumfang aufweisen kann, auf den jedoch zumindest auf Höhe des Koppelelements 13a eine "Rampe" 2i (d.h. eine Steigung in radialer Richtung entlang des Umfangs) aufgebracht ist. Bei Verdrehung der Sensorvorrichtung 1 relativ zu der Einbauvertiefung 2d wird der Sensor 12a bzw. das Koppelelement 13a dann verkeilt, vgl. den von einer Anfangsstellung (13a bei 9 Uhr) zu einer Endstellung (13a bei 12 Uhr) enger werdenden Spalt S zwischen dem Koppelelement 13a und der Seitenwand 2f der Einbauvertiefung 2b in Fig. 6B.

So kann die Einbauvertiefung 2b bspw. auch (leicht) elliptisch ausgeführt sein. Beim Einsetzen der Sensorvorrichtung 1 in die Einbauvertiefung 2b ist die Verbindungslinie von der Achse 2e der Sensorvorrichtung 1 zum Koppelelement 13a zunächst parallel zur Hauptachse ausgerichtet. Eine Verdrehung der Sensorvorrichtung 1 um einen Drehwinkel führt zu einer relativen Orientierung, bei der diese Verbindungslinie dann quer, insbesondere rechtwinklig, zu der Hauptachse angeordnet ist. In Fig. 6B ist die Seitenwand 2f unrund, bspw. elliptisch.

Alternativ ist es auch möglich, sowohl die Einbauvertiefung 2b wie das Sensorgehäuse unrund, bspw. elliptisch, auszuführen. Die Hauptachsen der Ellipsen sind beim Einsetzen parallel und im montierten Zustand quer zueinander ausgerichtet. Das Gehäuse der Sensorvorrichtung ist in Fig. 6A rund dargestellt. Das Vorstehen des Koppelelements 13a über den Außendurchmesser des Sensorgehäuses führt quasi schon zu einer Hauptachse im Sinne einer elliptischen Außenkontur.

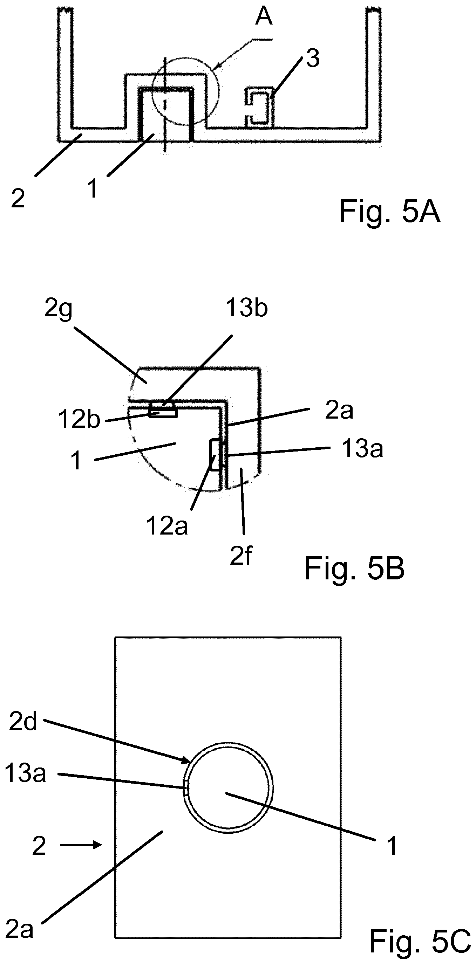

Die Fig. 5A bis Fig. 5C zeigen die Sensorvorrichtung 1 in montiertem Zustand. Wesentlich ist, dass sich die Koppelementente 13a und 13b an die Außenseite 2a des Tankgehäuses 2 anschmiegen, wie in der zugehörigen Detailzeichnung Fig. 5B erkennbar ist. In Fig. 5C ist eine Ansicht von unten auf die Einbauvertiefung 2d des Tankgehäuses 2 mit darin montierter Sensorvorrichtung 1 dargestellt. Hier sind die im Wesentlichen rotationssymmetrischen Grundformen der Sensorvorrichtung und der Einbauvertiefung 2d erkennbar. Das Koppelement 13a der Sensorvorrichtung 1 steht in direktem Kontakt mit der Außenseite 2a des Tankgehäuses 2.

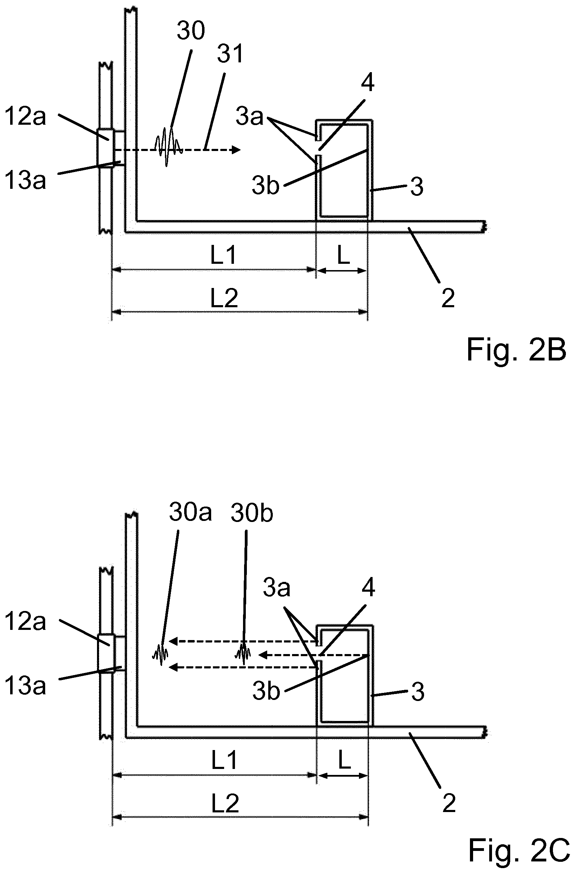

In Fig. 2A ist ein Ausschnitt aus Fig. 1 vergrößert dargestellt und anhand der Fig. 2B und Fig. 2C wird das Messprinzip der erfindungsgemäßen Vorrichtung erläutert.

In dem Innenraum 2 des Tankgehäuses 2 ist in einem Abstand zu der Einbauvertiefung 2d, in welcher die Sensorvorrichtung 1 aufgenommen ist, in einer Emissionsrichtung 31 der Sensorvorrichtung 1 ein Reflektorbauteil 3 an dem Wannenboden angebracht. Das Reflektorbauteil 3 weist eine erste Reflexionsfläche auf, die entlang der Emissionsrichtung 31 in einem ersten Abstand L1 zu der Sensorvorrichtung 1 angeordnet ist und als erster Reflektor 3a dient. Es weist außerdem eine zweite Reflexionsfläche auf, die in einem zweiten Abstand L2 zu der Sensorvorrichtung 1 angeordnet ist und als zweiter Reflektor 3b dient. Dabei ist der zweite Abstand L2 um einen Abstand L von vorzugsweise 20 mm bis 50 mm größer als der erste Abstand L1.

Das Reflektorbauteil 3 weist ein Metallelement auf, das die erste Reflexionsfläche sowie die zweite Reflexionsfläche ausbildet. Das Metallelement kann beispielsweise aus Aluminium, Eisen oder Edelstahl bestehen.

Durch eine Öffnung 14 des Gehäuses 11 der Sensorvorrichtung 1 wird mittels einer ersten Ultraschallsende- und Empfangseinheit 12a ein erstes Ultraschallsignal 30 durch das Koppelelement 13a und das Tankgehäuse 2, genauer durch die Seitenwand 2f der Einbauvertiefung 2d, entlang einer Emissionsrichtung 31 in Richtung des Reflektorbauteils 3 ausgesandt.

Im Abstand L1 erreicht das erste Ultraschallsignal den ersten Reflektor 3a, der einen ersten Teil 30a des ersten Ultraschallsignals 30 entgegen der Emissionsrichtung 31 zu der ersten Ultraschallsende- und Empfangseinheit 12a zurückreflektiert. In der ersten Reflexionsfläche ist eine Öffnung 4 vorgesehen, so dass ein anderer Teil des ersten Ultraschallsignals 30 weiter entlang der Emissionsrichtung 31 zu dem zweiten Reflektor 3b propagiert. Der zweite Reflektor 3b reflektiert daraufhin einen zweiten Teil 30b des ersten Ultraschallsignals 30 entgegen der Emissionsrichtung 31 durch die Öffnung 4 zu der ersten Ultraschallsende- und Empfangseinheit 12a zurück. Der reflektierte zweite Teil 30b muss gegenüber dem ersten Teil 30a somit eine um das Doppelte des Abstands L längere Entfernung zurücklegen (siehe Fig. 2C), bis er zu der ersten Ultraschallsende- und Empfangseinheit 12a gelangt. Entsprechend wird der zweite Teil 30b mit einer zeitlichen Verzögerung t (nicht gezeigt) gegenüber dem ersten Teil 30a von der ersten Ultraschallsende- und Empfangseinheit 12a detektiert. Mit anderen Worten wird eine unterschiedliche Laufzeit für den ersten Teil 30a und den zweiten Teil 30b detektiert. Die zeitliche Verzögerung t ist lediglich abhängig von dem Abstand L und von der Ultraschallgeschwindigkeit in der das Reflektorbauteil 3 umgebenden Lösung 15.

Die gemessene zeitliche Verzögerung t ergibt sich aus dem bekannten Abstand L und der Schallgeschwindigkeit v(c,T) der Ultraschallsignale in der Lösung 15 wie folgt: $t = 2 \cdot L / v(c,T)$. Die Schallgeschwindigkeit v(c,T) hängt dabei von einer Konzentration c (nicht gezeigt) des Harnstoffs in der wässrigen Lösung 15 und von der Temperatur T der Lösung ab. Die Abhängigkeit wird beispielsweise empirisch ermittelt und/oder anhand von Formeln gefasst. Aus der gemessenen zeitlichen Verzögerung t wird dann, bevorzugt unter Berücksichtigung der Temperatur T der wässrigen Lösung und der Temperaturabhängigkeit der Schallgeschwindigkeit v in der wässrigen Lösung, die Konzentration c des Harnstoffs in der wässrigen Lösung 15 ermittelt.

Das Reflektorbauteil 3 ist an dem Wannenboden des Tankgehäuses 2 angeordnet, damit auch dann, wenn nur ein kleiner Rest von Lösung 15 im Innenraum 2b des Tankgehäuses 2 übrig ist, der erste Reflektor 3a und der zweite Reflektor 3b noch in der Lösung 15 eingetaucht sind. Entsprechend sind auch die Einbauvertiefung 2d, die Sensorvorrichtung 1 und insbesondere die erste Ultraschallsende- und Empfangseinheit 12a im Bereich des Wannenbodens angeordnet. Die kompletten Wegstrecken des ersten Ultraschallsignals 30, des zurückreflektierten ersten Teils 30a und des zurückreflektierten zweiten Teils 30b liegen auch bei einem geringen Füllstand der Lösung 15 in dem Innenraum 2b noch unterhalb eines Flüssigkeitsspiegels der Lösung 15. Dadurch ist eine zuverlässige Bestimmung der Konzentration c des Harnstoffs in der Lösung 15 auch bei geringem Füllstand der Lösung 15 sichergestellt.

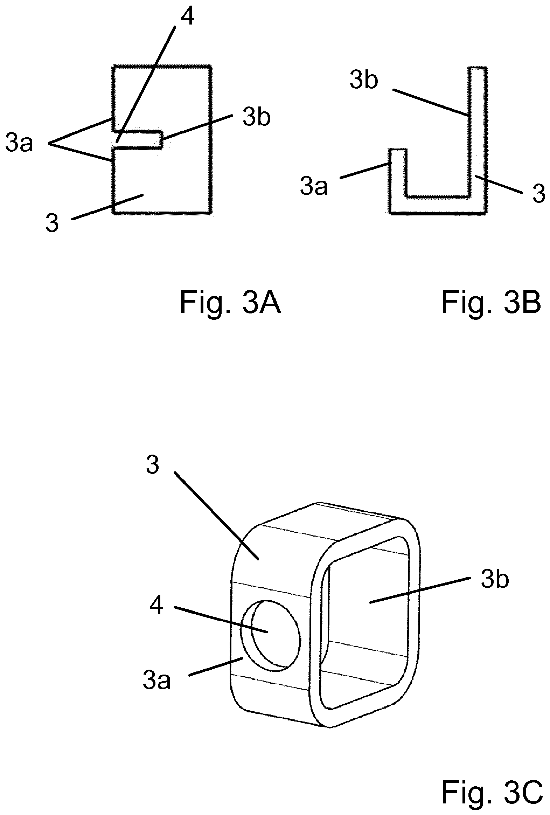

Das Reflektorbauteil 3 kann unterschiedlich ausgestaltet sein. Während das Reflektorbauteil 3 in Fig. 1 und Fig. 2 beispielhaft als Biegeteil mit einem verbleibenden Abstand gegenüberliegender Kanten zur Bildung der Öffnung 4 ausgestaltet ist, zeigen die Fig. 3A bis Fig. 3C weitere mögliche Ausführungsformen.

So kann das Reflektorbauteil 3 gemäß Fig. 3A auch quaderförmig ausgestaltet sein, wobei in den Quader beispielhaft eine Bohrung oder ein Schlitz zur Bildung der Öffnung 4 eingebracht wurde, so dass sich für den ersten Teil 30a und den zweiten Teil 30b unterschiedliche Wegstrecken durch Reflexion an einer Vorderfläche, die hier den ersten Reflektor 3a bildet, und einer Fläche am Ende der Bohrung oder des Schlitzes, die den zweiten Reflektor 3b bildet, ergeben.

Fig. 3B zeigt eine im Vergleich zum Referenzelement in Fig.1 und 2 vereinfachte Biegeform des Reflektorbauteils 3.

In Fig. 3C ist ein Reflektorbauteil 3 dargestellt, welches einen im Wesentlichen rechteckförmigen Querschnitt aufweist. In eine der Sensorvorrichtung 1 zugewandte Seite des Reflektorbauteils 3 ist eine kreisrunde Öffnung 4 eingebracht, durch die ein Teil des auf den ersten Reflektor 3a auftreffenden ersten Ultraschallsignals 30 hindurchtritt und zu dem zweiten Reflektor 3b gelangt.

Insbesondere in Fig. 5B ist erkennbar, dass die Sensorvorrichtung 1 neben der ersten Ultraschallsende- und -Empfangseinheit 12a mit dem Koppelelement 13a noch eine zweite Ultraschallsende- und Empfangseinheit 12b mit dem Koppelelement 13b aufweisen kann, die mittels des Koppelements 13b an die waagrechte Bodenwand 2g der Einbuchtung 2c des Tankgehäuses 2 ankoppelt. Sie wird für eine zusätzliche Messung des Füllstands der Lösung 15 in dem Innenraum 2 genutzt. Dazu emittiert die zweite Ultraschallsende- und Empfangseinheit 12b ein zweites Ultraschallsignal nach oben. Das zweite Ultraschallsignal propagiert durch das Koppelelement 13b, die Bodenwand 2g sowie die Lösung 15 bis zu dem Flüssigkeitsspiegel der Lösung 15. Dort wird ein Teil des zweiten Ultraschallsignals zur zweiten Ultraschallsende- und Empfangseinheit 12b zurückreflektiert. Aus der Laufzeit des so zurückreflektierten Signals können anhand der Schallgeschwindigkeit des zweiten Ultraschallsignals in der Lösung und/oder anhand empirischer Vergleichsdaten ein Abstand der Flüssigkeitsoberfläche zur Sensorvorrichtung 1 und somit der Füllstand der Lösung 15 im Innenraum 2 bestimmt werden. Dabei kann die Laufzeit des ersten Teils 30a des ersten Messsignals 30 und/oder die Laufzeit des zweiten Teils 30b des ersten Messsignals 30 und/oder die zeitliche Verzögerung t zwischen dem ersten Teil 30a und dem zweiten Teil 30b zur Kalibrierung der Füllstandmessung herangezogen werden.

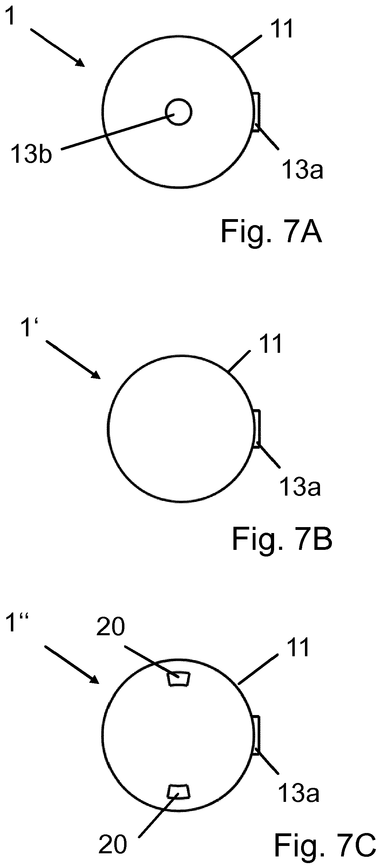

In Fig. 7A ist die Sensorvorrichtung 1 aus Fig. 1 in Aufsicht dargestellt. Wie zuvor beschrieben wurde, ist ein zusätzliches zweites Koppelelement 13b an der Oberseite vorgesehen, welches beispielsweise für die Füllstandmessung genutzt wird.

Fig. 7B zeigt eine alternative Ausführungsform einer Sensorvorrichtung 1' ohne das zusätzliche zweite Koppelelement 13b und entsprechend ohne zweite Ultraschallsende- und Empfangseinheit 12b in Aufsicht. Die Sensorvorrichtung 1' hat lediglich ein Koppelelement 13a, welches seitlich aus dem Gehäuse 11 der Sensoreinheit 1' herausragt auf. Auch diese Sensorvorrichtung 1' ermöglicht die Messung der Konzentration c des Harnstoffs in der Lösung 15.

Noch eine weitere Ausführungsform einer Sensorvorrichtung 1" ist in Fig. 7C in Aufsicht dargestellt. In diesem Fall sind neben dem seitlichen Koppelelement 13a aus Fig. 7A bzw. Fig. 7B zwei Kontaktelemente 20 an einer Oberseite der Sensorvorrichtung 1" angebracht. Die Kontaktelemente 20 können dazu genutzt werden, um elektrische oder thermische Verbindungen zwischen der Sensorvorrichtung 1" und dem Tankgehäuse 2 zu realisieren. In der dargestellten Ausführungsform handelt es sich um zwei Federkontakte, die sich bei der Verdrehung bei der Montage an entsprechende Gegenkontakte an dem Tankgehäuse 2 anschmiegen.

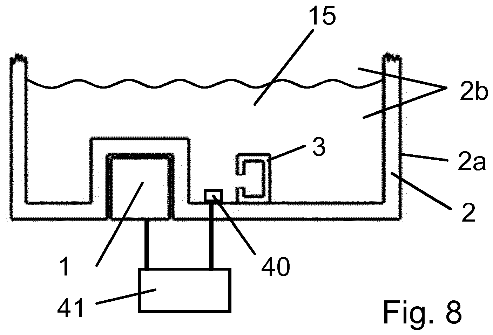

Eine weitere, erfindungsgemäße Ausführungsform einer Vorrichtung zum Messen einer Konzentration eines Reduktionsmittels in einer Lösung ist in Fig. 8 gezeigt. Sie entspricht im Grundsatz der in Fig. 1 dargestellten Vorrichtung. Entsprechend gelten die obigen Ausführungen und Bezugszeichen analog. Die in Fig. 8 gezeigte Vorrichtung weist zusätzlich einen Temperatursensor 40 auf, mit dem eine Temperatur T im Innenraum 2b des Tankgehäuses 2, genauer der Lösung 15, gemessen wird. Die Schallgeschwindigkeit v der Ultraschallsignale in der Lösung 15 hängt neben der Konzentration c des Harnstoffs im Allgemeinen auch von der Temperatur T der Lösung 15 ab. Die Abhängigkeit $v(c,T)$ wird beispielsweise empirisch ermittelt und/oder anhand von Formeln gefasst. Durch die zusätzliche Messung der Temperatur T wird die Genauigkeit der Messung der Konzentration c des Harnstoffs bei unterschiedlichen Temperaturen T verbessert.

Zur Bestimmung der Schallgeschwindigkeit aus den Messungen weist die in Fig. 8 gezeigte Vorrichtung eine Auswerteeinheit 41 auf, die mit der Sensorvorrichtung 1 und dem Temperatursensor 40 verbunden ist und aus den Messdaten die Konzentration c des Harnstoffs in der Lösung 15 ermittelt. Die Auswerteeinheit 41 kann einen Prozessor und einen Speicher aufweisen. Eine prinzipiell ähnliche Auswerteeinheit kann auch in der Anordnung nach Figur 1 eingesetzt werden, ist dort aber nicht dargestellt.

Bei der erfindungsgemäßen Vorrichtung aus Fig. 1 entspricht der Unterschied der von dem zweiten Teil 30b insgesamt zurückgelegten Wegstrecke gegenüber der von dem ersten Teil 30a insgesamt zurückgelegten Wegstrecke genau dem Zweifachen des Abstands L. Entsprechend hängt auch die zeitliche Verzögerung t bezüglich geometrischer Abmessungen nur von dem Abstand L ab. Dadurch ist eine hohe Genauigkeit bei der Messung der zeitlichen Verzögerung t und damit bei der Bestimmung der Konzentration c der Lösung 15 erzielbar. Indem die Sensorvorrichtung 1 an der Außenseite 2a des Tankgehäuses 2 angebracht ist, ist sie vor schädlichen Einflüssen durch die Lösung 15 und das darin enthaltene Reduktionsmittel geschützt und kann leicht ein- und ausgebaut werden.

Bezugszeichenliste:

| | |
|---|---|
| 1, 1', 1" | Sensorvorrichtung |
| 1a | Außengewinde |
| 2 | Tankgehäuse |
| 2a | Außenseite |
| 2b | Innenraum |
| 2c | Einbuchtung |
| 2d | Einbauvertiefung |
| 2e | Mittelachse |
| 2f | Seitenwand |
| 2g | Bodenwand |
| 2h | Innengewinde |
| 2i | Rampe |
| 3 | Reflektorbauteil |
| 3a | erster Reflektor |
| 3b | zweiter Reflektor |
| 4 | Öffnung |
| 11 | Gehäuse |
| 12a, 12b | Ultraschallsende- und Empfangseinheit |
| 13a, 13b | Koppelelement |
| 14 | Gehäuseöffnung |
| 15 | Lösung |
| 18 | Drehwinkel |
| 20 | Kontaktelement |
| 30 | erstes Messsignal |
| 30a | erster Teil |
| 30b | zweiter Teil |
| 31 | Emissionsrichtung |
| 40 | Temperatursensor |
| 41 | Auswerteeinheit |
| L | Abstand |
| L1 | erste Entfernung |
| L2 | zweite Entfernung |
| S | Spalt |

**Patentansprüche**

1. Vorrichtung zum Messen einer Konzentration eines Reduktionsmittels, insbesondere von Harnstoff, in einer Lösung, insbesondere einer wässrigen Lösung, umfassend:

ein Tankgehäuse (2) zur Bevorratung der Lösung in einem Innenraum (2b) des Tankgehäuses (2);
eine Sensorvorrichtung (1) zur Emission eines ersten Messsignals (30) entlang einer Emissionsrichtung (31) in den Innenraum (2b) und zum Empfang von Reflexionen des ersten Messsignals (30), wobei die Sensorvorrichtung (1) an einer dem Innenraum (2b) abgewandten Außenseite (2a) des Tankgehäuses (2) angebracht ist;
ein Reflektorbauteil (3) in dem Innenraum (2b) mit

einem ersten Reflektor (3a), der in der Emissionsrichtung (31) von der Sensorvorrichtung (1) beabstandet angeordnet ist und einen ersten Teil (30a) des ersten Messsignals (30) entgegen der Emissionsrichtung (31) zu der Sensorvorrichtung (1) zurückreflektiert, und

einem zweiten Reflektor (3b), der in der Emissionsrichtung (31) von der Sensorvorrichtung (1) um einen Abstand (L) weiter entfernt als der erste Reflektor (3a) beabstandet ist und der einen zweiten Teil (30b) des ersten Messsignals (30) entgegen der Emissionsrichtung (31) zu der Sensorvorrichtung (1) zurückreflektiert,

wobei das Tankgehäuse (2) eine sich im Wesentlichen in Richtung des Innenraums (2b) erstreckende Einbuchtung (2c) aufweist, durch die an der Außenseite (2a) des Tankgehäuses (2) eine Einbauvertiefung (2d) zur Aufnahme der Sensorvorrichtung (1) ausgebildet ist, wobei die Einbauvertiefung (2d) durch eine Bodenwand (2g) der Einbuchtung (2c) sowie durch eine Seitenwand (2f) der Einbuchtung (2c) begrenzt ist, und wobei die Sensorvorrichtung (1) in der Einbauvertiefung (2d) angeordnet ist, **dadurch gekennzeichnet, dass** eine Öffnung der Einbauvertiefung (2d) ein der Bodenwand (2g) der Einbuchtung (2c) und dem Innnraum (2b) des Tankgehäuses (2) abgewandtes, nach außen offenes Ende der Einbauvertiefung (2d) bildet und dass die Einbuchtung (2c) eine bottichartige Grundform aufweist, wobei die Sensorvorrichtung (1) das erste Messsignal (30) entlang der Emissionsrichtung (31) zumindest im Wesentlichen senkrecht zu der Seitenwand (2f) der Einbuchtung (2c) emittiert.

2. Vorrichtung nach Anspruch 1, **dadurch gekennzeichnet, dass** zumindest ein unterer Teil des Tankgehäuses (2) einstückig und wannenförmig ausgeführt ist, wobei die Einbuchtung (2c) in dem unteren Teil, bevorzugt in einem Wannenboden, gebildet ist und wobei das Reflektorbauteil (3) vorzugsweise an dem unteren Teil, insbesondere an dem Wannenboden, angeordnet ist.

3. Vorrichtung nach einem der Ansprüche 1 oder 2, **dadurch gekennzeichnet, dass** die Sensorvorrichtung (1) über eine Gewindeverbindung oder über eine Bajonettverbindung in der Einbauvertiefung (2d) befestigt ist.

4. Vorrichtung nach einem der vorhergehenden Ansprüche, **dadurch gekennzeichnet, dass** die Sensorvorrichtung (1) einen ersten Ultraschallsensor (12a) umfasst, der mit einer Sensorfläche an der Außenseite (2a) des Tankgehäuses (2) anliegt.

5. Vorrichtung nach Anspruch 4, **dadurch gekennzeichnet, dass** die Sensorvorrichtung (1) derart in der Einbauvertiefung (2d) montiert ist, dass die Sensorfläche mit einem Anpressdruck an der Außenseite (2a) des Tankgehäuses (2) anliegt.

6. Vorrichtung nach Anspruch 1 oder 2, **dadurch gekennzeichnet, dass** die Sensorvorrichtung (1) einen ersten Ultraschallsensor (12a) umfasst, der mit einer Sensorfläche an einem Koppelelement (13a) anliegt, wobei eine der Sensorfläche abgewandte Seite des Koppelelements (13a) an der Außenseite (2a) des Tankgehäuses (2) anliegt.

7. Vorrichtung nach Anspruch 6, **dadurch gekennzeichnet, dass** die Sensorvorrichtung (1) derart in der Einbauvertiefung (2d) montiert ist, dass das Koppelelement (13a) mit einem Anpressdruck an der Außenseite (2a) des Tankgehäuses (2) anliegt.

8. Vorrichtung nach Anspruch 5 oder 7, **dadurch gekennzeichnet, dass** der Anpressdruck mittels der Gewindeverbindung oder der Bajonettverbindung beim Befestigen der Sensorvorrichtung (1) in der Einbauvertiefung (2d) hergestellt wird.

9. Vorrichtung nach einem der Ansprüche 5 bis 8, **dadurch gekennzeichnet, dass** die Einbauvertiefung (2d) einen im Wesentlichen kreisförmigen Innenumfang aufweist, auf dem zumindest auf Höhe des ersten Ultraschallsensors (12a) des Koppelelements (13a) eine Rampe (2i) vorgesehen ist.

10. Vorrichtung nach einem der vorhergehenden Ansprüche, **dadurch gekennzeichnet, dass** das Reflektorbauteil (3) aus einem Material mit geringem Wärmeausdehnungskoeffizienten hergestellt ist, wobei der Wärmeausdehnungskoeffizient kleiner ist als ein Wärmeausdehnungskoeffizient des Tankgehäuses (2) und/oder kleiner als $100 \cdot 10^{-6}$ $K^{-1}$ ist.

11. Vorrichtung nach einem der vorhergehenden Ansprüche, **dadurch gekennzeichnet, dass** das Reflektorbauteil (3) aus einem vorzugsweise zumindest in einem Teilbereich mit Kunststoff beschichteten Metallelement besteht.

12. Vorrichtung nach einem der vorhergehenden Ansprüche, **dadurch gekennzeichnet, dass** das Tankgehäuse (2) im Rotationsschmelzverfahren hergestellt ist, wobei das Reflektorbauteil (3) vorzugsweise zumindest teilweise in das Tankgehäuse (2) eingesintert ist.

13. Vorrichtung nach einem der vorhergehenden Ansprüche, wobei die Lösung in einem Innenraum (2b) des Tankgehäuses (2) einen Flüssigkeitsspiegel ausbildet, **dadurch gekennzeichnet, dass** die Sensorvorrichtung (1) ein Messsignal zur Füllstandsmessung emittiert, welches direkt oder über eine Umlenkeinheit in Richtung des Flüssigkeitsspiegels gerichtet ist und einen aus dem ersten Messsignal ausgekoppelten dritten Teil des ersten Messsignals oder ein von einem zweiten Sensor emittiertes zweites Messsignal umfasst.

14. Vorrichtung nach einem der vorhergehenden Ansprüche, **gekennzeichnet durch** eine mit der Sensorvorrichtung (1) verbundene oder in der Sensoreinheit (1) angeordnete Auswerteeinheit (41) zur Ermittlung der Konzentration des Reduktionsmittels in der Lösung unter Berücksichtigung einer zeitlichen Verzögerung des Empfangs des zweiten Teils (30b) des ersten Messsignals (30), der von dem zweiten Reflektor (3b) zu der Sensorvorrichtung zurückreflektiert wird, gegenüber dem Empfang des ersten Teils (30a) des ersten Messsignals (30), der von dem ersten Reflektor (3a) zu der Sensorvorrichtung (1) zurückreflektiert wird, sowie des Abstands (L).

15. Vorrichtung nach Anspruch 14, **gekennzeichnet durch** einen mit der Auswerteeinheit (41) verbundenen Temperatursensor (40) zur Messung einer Temperatur im Innenraum (2b) des Tankgehäuses (2), wobei die Auswerteeinheit (41) zur Ermittlung der Konzentration eine Temperaturabhängigkeit einer Schallgeschwindigkeit in der Lösung berücksichtigt.

16. Vorrichtung nach einem der vorhergehenden Ansprüche, **dadurch gekennzeichnet, dass** die Sensorvorrichtung (1") wenigstens ein Kontaktelement (20) umfasst, welches in Einbaulage in elektrischem und/oder thermischem Kontakt zu einem an dem Tankgehäuse (2) angeordneten Gegenkontakt steht.

**Claims**

1. Device for measuring a concentration of a reducing agent, in particular urea, in a solution, in particular an aqueous solution, comprising:

   a tank housing (2) for storing the solution in an interior space (2b) of the tank housing (2); a sensor device (1) for emitting a first measurement signal (30) along an emission direction (31) into the interior space (2b) and for receiving reflections of the first measurement signal (30), the sensor device (1) being mounted on an outer side (2a) of the tank housing (2) facing away from the interior space (2b)

a reflector component (3) in the interior space (2b) having

a first reflector (3a) which is arranged at a distance from the sensor device (1) in the emission direction (31) and reflects a first part (30a) of the first measurement signal (30) back to the sensor device (1) opposite to the emission direction (31), and

a second reflector (3b) which is spaced apart from the sensor device (1) in the emission direction (31) by a distance (L) further than the first reflector (3a) and which reflects a second part (30b) of the first measurement signal (30) back to the sensor device (1) opposite to the emission direction (31),

wherein the tank housing (2) has an indentation (2c) extending substantially in the direction of the interior (2b), through which indentation (2c) an installation recess (2d) for receiving the sensor device (1) is formed on the outside (2a) of the tank housing (2), wherein the installation recess (2d) is bounded by a bottom wall (2g) of the recess (2c) and by a side wall (2f) of the recess (2c), and wherein the sensor device (1) is arranged in the installation recess (2d), **characterized in that** an opening of the installation recess (2d) forms an outwardly open end of the installation recess (2d) facing away from the bottom wall (2g) of the recess (2c) and the interior (2b) of the tank housing (2), and **in that** the indentation (2c) has a tub-like basic shape, the sensor device (1) emitting the first measurement signal (30) along the emission direction (31) at least essentially perpendicular to the side wall (2f) of the indentation (2c).

2. Device according to claim 1, **characterized in that** at least a lower part of the tank housing (2) is made in one piece and trough-shaped, wherein the indentation (2c) is formed in the lower part, preferably in a trough bottom, and wherein the reflector component (3) is preferably arranged on the lower part, in particular on the trough bottom.

3. Device according to any one of the claims 1 or 2, **characterized in that** the sensor device (1) is fixed in the installation recess (2d) via a threaded connection or via a bayonet connection.

4. Device according to any one of the preceding claims, **characterized in that** the sensor device (1) comprises a first ultrasonic sensor (12a) which bears with a sensor surface against the outside (2a) of the tank housing (2).

5. Device according to claim 4, **characterized in that** the sensor device (1) is mounted in the installation recess (2d) in such a way that the sensor surface bears with a contact pressure against the outer side (2a) of the tank housing (2).

6. Device according to claim 1 or 2, **characterized in that** the sensor device (1) comprises a first ultrasonic sensor (12a) which bears with a sensor surface against a coupling element (13a), wherein a side of the coupling element (13a) facing away from the sensor surface bears against the outer side (2a) of the tank housing (2).

7. Device according to claim 6, **characterized in that** the sensor device (1) is mounted in the installation recess (2d) in such a way that the coupling element (13a) bears against the outer side (2a) of the tank housing (2) with a contact pressure.

8. Device according to claim 5 or 7, **characterized in that** the contact pressure is produced by means of the threaded connection or the bayonet connection when the sensor device (1) is mounted in the installation recess (2d).

9. Device according to any one of the claims 5 to 8, **characterized in that** the installation recess (2d) has a substantially circular inner circumference on which a ramp (2i) is provided at least at the level of the first ultrasonic sensor (12a) of the coupling element (13a).

10. Device according to any one of the preceding claims, **characterized in that** the reflector component (3) is made of a material having a low coefficient of thermal expansion, the coefficient of thermal expansion being smaller than a coefficient of thermal expansion of the tank housing (2) and/or smaller than $100 * 10^{-6}$ $K^{-1}$.

11. Device according to any one of the preceding claims, **characterized in that** the reflector component (3) consists of a metal element preferably coated with plastic at least in a partial region.

12. Device according to any one of the preceding claims, **characterized in that** the tank housing (2) is produced by rotational melting, the reflector component (3) preferably being sintered at least partially into the tank housing (2).

13. Device according to any one of the preceding claims, wherein the solution forms a liquid level in an interior space (2b) of the tank housing (2), **characterized in that** the sensor device (1) emits a measurement signal for level measurement, which is directed in the direction of the liquid level directly or via a deflection unit and comprises a third part of the first measurement signal decoupled from the first measurement signal or a second measurement signal emitted by a second sensor.

14. Device according to any one of the preceding claims, **characterized by** an evaluation unit (41) connected to the sensor device (1) or arranged in the sensor device (1) for determining the concentration of the reducing agent in the solution taking into account a time delay of the reception of the second part (30b) of the first measurement signal (30), which is reflected back to the sensor device by the second reflector (3b), with respect to the reception of the first part (30a) of the first measurement signal (30) which is reflected back to the sensor device (1) by the first reflector (3a), and of the distance (L).

15. Device according to claim 14, **characterized by** a temperature sensor (40) connected to the evaluation unit (41) for measuring a temperature in the interior (2b) of the tank housing (2), wherein the evaluation unit (41) takes into account a temperature dependence of a sound velocity in the solution for determining the concentration.

16. Device according to any one of the preceding claims, **characterized in that** the sensor device (1") comprises at least one contact element (20) which, in the installed position, is in electrical and/or thermal contact with a mating contact arranged on the tank housing (2).

**Revendications**

1. Dispositif de mesure de la concentration d'un agent réducteur, en particulier d'urée, dans une solution, en particulier une solution aqueuse, comprenant :

   un boîtier de réservoir (2) pour le stockage de la solution dans un intérieur (2b) du boîtier de réservoir (2) ;
   un dispositif de détection (1) pour l'émission d'un premier signal de mesure (30) dans un sens d'émission (31) dans l'intérieur (2b) et pour la réception de réflexions du premier signal de mesure (30), le dispositif de détection (1) étant installé au niveau d'un côté extérieur (2a) détourné de l'intérieur (2b) du boîtier de réservoir (2) ;
   une pièce de réflexion (3) située dans l'intérieur (2b) et comportant
   un premier réflecteur (3a) qui est disposé à distance du dispositif de détection (1) dans le sens d'émission (31) et renvoie une première partie (30a) du premier signal de mesure (30) à l'inverse du sens d'émission (31) vers le dispositif de détection (1), et
   un second réflecteur (3b) qui est éloigné plus loin du dispositif de détection (1) dans le sens d'émission (31) à raison d'une distance (L) que le premier réflecteur (3a) et qui renvoie une deuxième partie (30b) du premier signal de mesure (30) à l'inverse du sens d'émission (31) vers le dispositif de détection (1),
le boîtier de réservoir (2) présentant un creux (2c) s'étendant sensiblement en direction de l'intérieur (2b) et à travers lequel, au niveau de la face extérieure (2a) du boîtier de réservoir (2), une dépression de montage (2d) destinée à recevoir le dispositif de détection (1) est formée, la dépression de montage (2d) étant limitée par une paroi de fond (2g) du creux (2c) et par une paroi latérale (2f) du creux (2c), et le dispositif de détection (1) étant disposé dans la dépression de montage (2d),
**caractérisé en ce qu'**une ouverture de la dépression de montage (2d) constitue une extrémité détournée la paroi de fond (2g) du creux (2c) et de l'intérieur (2b) du boîtier de réservoir (2) et ouverte vers l'extérieur de la dépression de montage (2d) et que le creux (2c) présente une forme de base en forme de bac, le dispositif de détection (1) émettant le premier signal de mesure (30) dans le sens d'émission (31) du moins sensiblement à la perpendiculaire de la paroi latérale (2f) du creux (2c).

2. Dispositif selon la revendication 1, **caractérisé en ce qu'**au moins une partie inférieure du boîtier de réservoir (2) a une conformation monobloc et en forme de cuvette, le creux (2c) étant disposé dans la partie inférieure, de préférence dans un fond de cuvette, et la pièce de réflexion (3) étant disposée de préférence au niveau de la partie inférieure, en particulier au fond de la cuvette.

3. Dispositif selon une des revendications 1 ou 2, **caractérisé en ce que** le dispositif de détection (1) est fixé par un raccord fileté ou par un raccord à baïonnette dans la dépression de montage (2d).

4. Dispositif selon une des revendications précédentes, **caractérisé en ce que** le dispositif de détection (1) comprend un premier capteur échographique (12a) qui est en contact par une surface de détection avec la face extérieure (2a) du boîtier de réservoir (2).

5. Dispositif selon la revendication 4, **caractérisé en ce que** le dispositif de détection (1) est monté dans la dépression de montage (2d) de manière à ce que la surface de détection repose avec une force de compression au niveau de la face extérieure (2a) du boîtier de réservoir (2).

6. Dispositif selon la revendication 1 ou 2, **caractérisé**

**en ce que** le dispositif de détection (1) présente un premier capteur d'ultrasons (12a) qui repose par une surface de détection au niveau d'un élément de couplage (13a), une face détournée de la surface de détection de l'élément de couplage (13a) étant en contact avec la surface extérieure (2a) du boîtier de réservoir (2).

**7.** Dispositif selon la revendication 6, **caractérisé en ce que** le dispositif de détection (1) est monté dans la dépression de montage (2d) de manière à ce que l'élément de couplage (13a) repose avec une force de compression au niveau de la face extérieure (2a) du boîtier de réservoir (2).

**8.** Dispositif selon la revendication 5 ou 7, **caractérisé en ce que** la force de compression est établie au moyen du raccord fileté ou du raccord à baïonnette lors de la fixation du dispositif de détection (1) dans la dépression de montage (2d).

**9.** Dispositif selon une des revendications 5 à 8, **caractérisé en ce que** la dépression de montage (2d) présente une circonférence intérieure sensiblement de forme circulaire sur laquelle, au moins à hauteur du premier capteur échographique (12a) de l'élément de couplage (13a), une rampe (2i) est prévue.

**10.** Dispositif selon une des revendications précédentes, **caractérisé en ce que** la pièce de réflexion (3) est fabriquée à partir d'un matériau ayant un faible coefficient d'expansion thermique, le coefficient d'expansion thermique étant inférieur à un coefficient d'expansion thermique du boîtier de réservoir (2) et/ou inférieur à $100 \cdot 10^{-6} K^{-1}$.

**11.** Dispositif selon une des revendications précédentes, **caractérisé en ce que** la pièce de réflexion (3) est composée d'un élément métallique revêtu de matière plastique, de préférence au moins dans une zone partielle.

**12.** Dispositif selon une des revendications précédentes, **caractérisé en ce que** le boîtier de réservoir (2) est réalisé par procédé de coulée rotative, la pièce de réflexion (3) étant de préférence au moins partiellement frittée dans le boîtier de réservoir (2) .

**13.** Dispositif selon une des revendications précédentes, dans lequel la solution forme un niveau de liquide dans un intérieur (2b) du boîtier de réservoir (2), **caractérisé en ce que** le dispositif de détection (1) émet, pour la mesure du niveau, un signal de mesure dirigé directement ou par une unité d'inversion en direction du niveau de liquide et comprend un second signal de mesure émis à partir de la troisième partie découplée du premier signal de mesure du premier signal de mesure ou par un second capteur.

**14.** Dispositif selon une des revendications précédentes, **caractérisé par** une unité d'exploitation (41) connectée au dispositif de détection (1) ou disposée dans l'unité de détection (1) pour déterminer la concentration de l'agent réducteur dans la solution en tenant compte du retardement temporel de la réception de la deuxième partie (30b) du premier signal de mesure (30) qui est renvoyée par le second réflecteur (3b) vers le dispositif de détection, par rapport à la réception de la première partie (30a) du premier signal de mesure (30) qui est renvoyée par le premier réflecteur (3a) vers le dispositif de détection (1) et de la distance (L).

**15.** Dispositif selon la revendication 14, **caractérisé par** un capteur de température (40) connecté à l'unité d'exploitation (41) pour la mesure d'une température dans l'intérieur (2b) du boîtier de réservoir (2), l'unité d'exploitation (41), pour déterminer la concentration, tenant compte d'une dépendance de température d'une vitesse du son dans la solution.

**16.** Dispositif selon une des revendications précédentes, **caractérisé en ce que** le dispositif de détection (1") comprend au moins un élément de contact (20) qui, en position de montage, est en contact électrique et/ou thermique avec un contre-contact disposé au niveau du boîtier de réservoir (2).

Fig. 1

Fig. 2A

Fig. 2B

Fig. 2C

Fig. 3A      Fig. 3B

Fig. 3C

Fig. 4A

Fig. 4B

A

3

2        1

**Fig. 5A**

2g        13b

12b

2a

1        13a

12a

2f        **Fig. 5B**

2d

13a

2 →        1

2a        **Fig. 5C**

Fig. 6A

Fig. 6B

1

11

13b

13a

Fig. 7A

1'

11

13a

Fig. 7B

1''    20

11

13a

20

Fig. 7C

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006013263 A1
- WO 2014090848 A
- WO 2013135486 A
- DE 102009000062 A